# EUROPÄISCHE PATENTSCHRIFT

(11) **EP 1 318 966 B1**
(45) Veröffentlichungstag und Bekanntmachung des Hinweises auf die Patenterteilung: **30.11.2005**
(21) Anmeldenummer: 01969740.8
(22) Anmeldetag: 19.09.2001
(51) Int. Cl.: B67D 5/08, G01F 23/00, G01F 15/08

(54) **VERFAHREN UND VORRICHTUNG ZUM BESTIMMEN VON FLUIDMENGEN**
METHOD AND DEVICE FOR DETERMINING QUANTITIES OF FLUID
PROCEDE ET DISPOSITIF POUR DETERMINER DES VOLUMES FLUIDIQUES

(30) Priorität: 21.09.2000 DE 10046921
(43) Veröffentlichungstag der Anmeldung: 18.06.2003
(73) Patentinhaber: Bartec GmbH, 97980 Bad Mergentheim (DE)
(72) Erfinder: BÖHM, Alfred, 94234 Viechtach (DE); BARLIAN, Reinhold, A., 97980 Bad Mergentheim (DE)
(74) Vertreter: Heim, Hans-Karl
(86) Internationale Anmeldenummer: PCT/EP2001/010840
(87) Internationale Veröffentlichungsnummer: WO 2002/025226

(56) Entgegenhaltungen:
- EP-A- 0 391 806
- EP-A- 0 855 576
- DE-A- 19 821 559
- DE-C- 19 630 655
- DE-C- 19 733 715
- US-A- 2 696 113
- US-A- 5 505 335

## Beschreibung

Die Erfindung betrifft ein Verfahren zum Bestimmen der durch ein Leitungssystem aus einem Tank, insbesondere aus einem Kraftstofftank, abgegebenen Fluidmenge, bei dem zum Bestimmen der abgegebenen Fluidmenge die vor der Fluidabgabe im Tank enthaltene Fluidmenge mit der nach der Fluidabgabe im Tank enthaltenen Fluidmenge verrechnet wird, die in dem Leitungssystem enthaltene Fluidmenge erfasst wird, und die im Leitungssystem enthaltene Fluidmenge bei der Bestimmung der abgegebenen Fluidmenge mitberücksichtigt wird. Ferner betrifft die Erfindung eine Vorrichtung zum Bestimmen der durch ein Leitungssystem aus einem Tank, insbesondere aus einem Kraftstofftank, abgegebenen Fluidmenge, mit einer Auswerteeinheit, die zum Bestimmen der abgegebenen Fluidmenge die vor der Fluidabgabe im Tank enthaltene Fluidmenge mit der nach der Fluidabgabe im Tank enthaltenen Fluidmenge verrechnet, und mit einer in dem Leitungssystem vorgesehenen Messeinrichtung zum Erfassen der im Leitungssystem enthaltenen Fluidmenge, die mit der Auswerteeinheit verbunden ist, wobei die Auswerteeinheit zur Berücksichtigung der im Leitungssystem erfassten Fluidmenge bei der Bestimmung der abgegebenen Fluidmenge ausgelegt ist.

Verfahren und Vorrichtungen zum Bestimmen der durch ein Leitungssystem aus einem Tank abgegebenen Fluidmenge sind bekannt und werden insbesondere bei Verteilerfahrzeugen für Heizöl, Diesel, Benzin, Superbenzin oder auch Chemikalien eingesetzt. Zum Bestimmen der durch das Leitungssystem aus dem Tank abgegebenen Fluidmenge wird häufig im Inneren des Tanks eine Füllhöhenmessung durchgeführt und entsprechend den vor und nach der Fluidabgabe gemessenen Füllhöhen die abgegebene Fluidmenge ermittelt. Insbesondere bei Verwendung dieses bekannten Verfahrens für Fluide, die schon bei geringen Temperaturen in die Gasphase übergehen können, wie beispielsweise Benzin, Diesel oder ähnlich leicht flüchtigen Substanzen, besteht das Problem, dass bei fast leerem Tank die Messeinrichtung nicht mehr ordnungsgemäß arbeitet und gleichzeitig mit dem Fluid Gas und Luft in das Leitungssystem gelangt, so dass die von der Messeinrichtung erfasste Fluidmenge nicht der tatsächlich insgesamt aus dem Tank und dem Leitungssystem abgegebenen Fluidmenge entspricht. Aufgrund gesetzlicher Vorschriften, insbesondere für derartige Substanzen, darf der entstehende Messfehler bei der abzugebenden Fluidmenge jedoch nicht größer als 0,5% sein.

Um diese gesetzlichen Vorschriften zu erfüllen, schlägt die EP 0 855 576 A1 ein Verfahren und eine Anlage zum Messen des Volumens durchströmender Flüssigkeiten vor, bei dem bzw. bei der mit Hilfe eines im Leitungssystem angeordneten Gasblasensensors der Anteil an Gasblasen im Fluid erfasst wird. In Strömungsrichtung des Fluids gesehen nach dem Gasblasensensor ist ferner ein Entlüftungsbehälter angeordnet, der durch eine Rückführleitung mit dem Tank verbunden ist. Weiterhin ist in Strömungsrichtung des Fluids gesehen nach dem Entlüftungsbehälter der Zähler angeordnet, mit dem die abgegebene Fluidmenge bestimmt wird. Sobald der Gasblasensensor einen zu hohen Gasanteil im Fluid erfasst, wird die Rückführleitung des Entlüftungsbehälters geöffnet, so dass das Gas, das sich im Entlüftungsbehälter gesammelt hat, wieder in den Tank zurückströmt und bei der Bestimmung der abgegebenen Fluidmenge durch den Zähler nicht fälschlicherweise miterfasst wird.

Aus der DE 197 33 715 C1 ist ein Verfahren und eine Anlage zur Abgabe von Flüssigkeiten aus einem Tankwagen bekannt. Bei diesem Verfahren bzw. dieser Anlage ist im Leitungssystem ein Gasblasensensor sowie ein Drucksensor vorgesehen. Der Drucksensor erfasst den im Leitungssystem wirkenden geodätischen Druck, der sich mit abnehmendem Flüssigkeitsstand im Tank reduziert. Ab einem bestimmten Druckwert drosselt ein mit dem Drucksensor in Verbindung stehender Druckschalter das Bodenventil des Tanks, wodurch die Gefahr des Mitreißens von Gasbeimengungen verringert werden soll. Sobald der Gasblasensensor einen zu hohen Anteil an Gas im Fluid erfasst, wird das Abgabeventil am Ende des Leitungssystems geschlossen und die Fluidabgabe beendet. Der noch im Leitungssystem verbleibende Rest des Fluids wird entleert, ohne dass dabei die Fluidmenge von der Anlage bestimmt wird.

Bei diesen bekannten Verfahren und diesen bekannten Anlagen besteht das Problem, dass die abgegebene Fluidmenge durch das im Fluid enthaltene Gas, insbesondere bei annähernd leerem Tank, eine präzise Bestimmung der abgegebenen Fluidmenge verhindert.

Die US 5 505 335 A offenbart eine Fördereinrichtung für Flüssigkeiten, bei der zum Bestimmen der abgegebenen Flüssigkeitsmenge vor und nach der Abgabe der Flüssigkeit das Gewicht des Tanks gemessen wird. Um die Messwerte nicht zu verfälschen, ist das Leitungssystem sowohl bei der Gewichtsmessung vor der Fluidabgabe als auch bei der Gewichtsmessung nach der Fluidabgabe leergepumpt.

Aus der DE 198 21 559 A1 ist eine Einrichtung zur Abgabe messbarer Mengen von unterschiedlichen Flüssigkeitssorten bekannt. Die mit den unterschiedlichen Flüssigkeitssorten gefüllten Tanks stehen durch ein Leitungssystem mit einem gemeinsamen Schlauch in Strömungsverbindung. In der Leitung jedes Tanks, die mit dem Leitungssystem in Verbindung steht, ist jeweils eine Messeinrichtung zur Messung der aus dem Tank abgegebenen Fluidmenge vorgesehen. Um eine korrekte Abrechnung der abzugebenden Flüssigkeitsmenge zu gewährleisten, werden entweder die zum Auffüllen des Leitungssystems und des Schlauches abgegebene Fluidmenge nicht bewertet oder die im Schlauch enthaltene Fluidmenge wird nach dem Ende der Fluidabgabe in den Tank zurückgeführt, wobei die zurückgeführte Fluidmenge erfasst und mit der abgegebenen Fluidmenge verrechnet wird.

Die DE 196 30 655 C1 beschreibt ein Verfahren und eine Vorrichtung zum wahlweisen Messen der Flüssigkeitsmenge bzw. des Leerstands in den einzelnen Kammern eines Tankwagens oder des Füllstands im Rohrleitungsabschnitt zwischen einem Bodenventil und einem Befüll- und Abgabeventil. Hierzu wird an einer Messstelle an einem tiefliegenden Punkt des Rohrleitungsabschnitts ein Druck unterhalb einer Flüssigkeitssäule gemessen, der sich nach Einleiten einer vorgegebenen Gasmenge unter vorgegebenem Druck einstellt.

Die US 2,696,113 offenbart ein Verfahren zur Bestimmung des Flüssigkeitsvolumens, das eine Transferleitung passiert hat. Hierzu wird das Leervolumen in der Transferleitung bestimmt, indem die Druckänderung gemessen wird, die sich durch das Beaufschlagen der Transferleitung mit einem Gasvolumen ergibt.

Es ist **Aufgabe** der Erfindung ein Verfahren bzw. eine Vorrichtung zum Bestimmen der durch ein Leitungssystem aus einem Tank abgegebenen Fluidmenge anzugeben, bei dem bzw. bei der auch bei annähernd leerem Tank eine präzise Bestimmung der insgesamt abgegebenen Fluidmenge möglich ist.

Diese Aufgabe wird mit einem Verfahren gemäß Patentanspruch 1 sowie mit einer Vorrichtung nach Patentanspruch 10 gelöst.

Bei dem erfindungsgemäßen Verfahren ist vorgesehen, dass die in dem Leitungssystem enthaltene Fluidmenge erfasst und dass die im Leitungssystem erfasste Fluidmenge bei der Bestimmung der abgegebenen Fluidmenge mitberücksichtigt wird. Bei dem erfindungsgemäßen Verfahren wird die in dem Leitungssystem enthaltene Fluidmenge zur Bestimmung der insgesamt aus dem Tank und dem Leitungssystem abgegebenen Fluidmenge mitberücksichtigt. Besonders im Leitungssystem sammeln sich während der Fluidabgabe Gase, die eine exakte Bestimmung der abgegebenen Fluidmenge bei annähernd leerem Tank verhindern. Zur präzisen Bestimmung der abgegebenen Fluidmenge wird bei dem erfindungsgemäßen Verfahren aus diesem Grund zusätzlich zu der aus dem Tank abgegebenen, erfassten Fluidmenge die im Leitungssystem enthaltene Fluidmenge erfasst und mit der aus dem Tank abgegebenen Fluidmenge verrechnet. Auf diese

Weise ist es möglich, trotz der während der Fluidabgabe in das Leitungssystem geförderten Gase, die sich im Leitungssystem sammeln, eine präzise Bestimmung der abgegebenen Fluidmengen durchzuführen, ohne dass hierzu ein Gasabscheider, wie er im Stand der Technik verwendet wird, erforderlich ist.

Vorzugsweise wird die im Leitungssystem enthaltene Fluidmenge erfasst, nachdem die Strömungsverbindung vom Tank in das Leitungssystem unterbrochen und im Leitungssystem und Peilrohr vorhandenes Gas abgeführt wurde bzw. entlüftet wurde.

Des Weiteren wird vorgeschlagen, dass bei der Bestimmung der abgegebenen Fluidmenge die vor der Fluidabgabe im Leitungssystem enthaltene Fluidmenge mit der nach der Fluidabgabe im Leitungssystem enthaltenen Fluidmenge verrechnet wird, so dass sichergestellt ist, dass Fluid, das vor der Fluidabgabe noch im Leitungssystem enthalten war, bei der Bestimmung der insgesamt abgegebenen Fluidmenge mitberücksichtigt wird.

Ist zumindest ein Abschnitt des Leitungssystems vor der Fluidabgabe nicht mit Fluid gefüllt, so wird vorgeschlagen, den Abschnitt des Leitungssystems am Ende der Fluidabgabe zu entleeren, so dass nach der Fluidabgabe die Fluidmenge im Abschnitt des Leitungssystems bei der Bestimmung der abgegebenen Fluidmenge unberücksichtigt bleiben kann, wodurch die Bestimmung der abgegebenen Fluidmenge vereinfacht ist.

Sollte dagegen, nachdem zumindest ein Abschnitt des Leitungssystems vor der Fluidabgabe nicht mit Fluid gefüllt war, nach der Fluidabgabe im Abschnitt Fluid enthalten sein, wird für eine präzise Bestimmung der abgegebenen Fluidmenge vorgeschlagen, bei der Bestimmung der abgegebenen Fluidmenge die im Abschnitt nach der Fluidabgabe enthaltene Fluidmenge zu erfassen und von der aus dem Tank abgegebenen Fluidmenge abzuziehen.

Ist zumindest ein Abschnitt des Leitungssystems vor der Fluidabgabe mit Fluid gefüllt, ist es für eine präzise Bestimmung der insgesamt abgegebenen Fluidmenge von Vorteil, wenn die vor der Fluidabgabe in dem Abschnitt enthaltene Fluidmenge erfasst wird. Bei leerem Abschnitt nach der Fluidabgabe kann dann bei der Bestimmung der abgegebenen Fluidmenge die vor der Fluidabgabe im Abschnitt erfasste Fluidmenge zu der aus dem Tank abgegebenen Fluidmenge addiert werden.

Des weiteren wird vorgeschlagen, dass in Fällen, in denen zumindest ein Abschnitt des Leitungssystems vor der Fluidabgabe und auch nach der Fluidabgabe mit Fluid gefüllt ist, die insgesamt abgegebene Fluidmenge unter Berücksichtigung der vor der Fluidabgabe und der nach der Fluidabgabe im Abschnitt des Leitungssystems enthaltenen Fluidmenge zu berechnen. Dieses Verfahren ist insbesondere dann von Vorteil, wenn das Fluid aus dem Tank durch sogenannte Vollschläuche abgegeben werden soll, die sowohl vor als auch nach der Fluidabgabe mit Fluid gefüllt sind. In diesem Fall wird die in dem Abschnitt vor der Fluidabgabe enthaltene Fluidmenge erfasst, nach der Fluidabgabe die in dem zumindest teilweise gefüllten Abschnitt des Leitungssystems enthaltene Fluidmenge ermittelt und bei der Bestimmung der insgesamt abgegebenen Fluidmenge mit der vor der Fluidabgabe im Abschnitt enthaltenen Fluidmenge verrechnet.

Bei einer bevorzugten Ausführungsform des Verfahrens wird die im Leitungssystem enthaltene Fluidmenge nur dann bei der Bestimmung der abgegebenen Fluidmenge mitberücksichtigt, wenn die im Tank enthaltene Fluidmenge kleiner oder gleich einem vorgegebenen Schwellwert ist. Ist die im Tank enthaltene Fluidmenge größer als der vorgegebene Schwellwert, ist davon auszugehen, dass allenfalls geringe Gasmengen bei der Fluidabgabe in das Leitungssystem gelangen. Da das Volumen des Leitungssystems bekannt ist, kann die insgesamt abgegebene Fluidmenge bestimmt werden, indem die vor der Fluidabgabe im Tank enthaltene Fluidmenge mit der nach der Fluidabgabe im Tank enthaltenen Fluidmenge verrechnet wird. Dabei wird gegebenenfalls das im Leitungssystem enthaltene Fluid, dessen Menge aufgrund des bekannten Volumens des Leitungssystems vorgegeben ist, mitberücksichtigt, sofern das Leitungssystem vor der Fluidabgabe leer bzw. vollständig gefüllt war und das Leitungssystem nach der Fluidabgabe vollständig geleert bzw. vollständig gefüllt worden ist.

Bei den zuvor beschriebenen Vorgehensweisen, bei denen nach der Fluidabgabe im Leitungssystem noch Fluid enthalten ist, wird vorgeschlagen, die nach dem Ende der Fluidabgabe im Leitungssystem enthaltene Fluidmenge wieder in den Tank zurückzufördern, wobei die wieder in den Tank zurückgeförderte Fluidmenge bei der Bestimmung der insgesamt abgegebenen Fluidmenge nicht mitberücksichtigt wird. Das Zurückfördern von Restfluid aus dem Leitungssystem in den Tank ist insbesondere dann von Vorteil, wenn der Tank in einzelne Tanksegmente untergliedert ist, die mit verschiedenen Fluiden gefüllt sind, so dass bei einer nachfolgenden Fluidabgabe das abzugebende Fluid nicht mit dem noch in dem Leitungssystem befindlichen Restfluid vermischt wird.

Bei dem erfinungsgemäßen Verfahren ist vorgesehen, die Fluidmenge durch eine im Leitungssystem vorgesehene Messeinrichtung zu erfassen. Hierzu eignet sich beispielsweise ein Peilrohr oder auch eine Ultraschallmesseinrichtung. Alternativ wird auch die Verwendung einer Messeinrichtung vorgeschlagen, bei der die Fluidmenge durch ein potenziometrisches Messverfahren oder ähnliche Verfahren ermittelt wird.

Zum Bestimmen der aus dem Tank abgegebenen Fluidmenge wird vorgeschlagen, im Tank eine Messeinrichtung-anzuordnen, die die aus dem Tank abgegebene Fluidmenge erfasst. Hierzu eignet sich beispielsweise ein Peilstab, mit dem das Flüssigkeitsniveau im Tank ermittelt wird. Alternativ ist es auch denkbar, eine Messeinrichtung vorzusehen, die außerhalb des Tanks angeordnet ist, um beispielsweise das im Tank enthaltene Fluidvolumen, den Flüssigkeitsspiegel des Fluids oder ähnliches zu erfassen.

Insbesondere bei Verwendung des erfindungsgemäßen Verfahrens mit einem nicht stationären Tank, der beispielsweise auf Tankfahrzeugen befestigt ist, ist es von Vorteil, wenn bei der Fluidabgabe die Neigung des Tanks und/oder die Neigung des Leitungssystems erfasst wird. Anschließend wird bei der Bestimmung der tatsächlich abgegebenen Fluidmenge die zuvor theoretisch bestimmte Fluidmenge entsprechend der ermittelten Neigung korrigiert.

Soll der Tank vollständig über einen Auslass entleert werden, wird der Auslass vorzugsweise mit dem Leitungssystem verbunden und zum Erfassen des vollständigen Entleerens des Tanks die im Leitungssystem enthaltene Fluidmenge kontinuierlich erfasst. Auf diese Weise kann durch das erfindungsgemäße Verfahren ein vollständiges Entleeren des Tanks ermittelt werden, ohne dass hierzu weitere Sensoren erforderlich sind.

Da sowohl das Volumen des Fluids als auch dessen Neigung zur Gasbildung von der Temperatur des Fluids abhängen, ist es ferner von Vorteil, wenn eine Temperaturkompensation vorgenommen wird, bei der zunächst die Temperatur des Fluids erfasst und anschließend bei der Bestimmung der tatsächlich abgegebenen Fluidmenge die zuvor theoretisch bestimmt Fluidmenge entsprechend der Temperatur des Fluides korrigiert wird.

Die erfindungsgemäße Vorrichtung sieht vor, dass in dem Leitungssystem eine Messeinrichtung zum Erfassen der im Leitungssystem enthaltenen Fluidmenge vorgesehen ist, die mit der Auswerteeinheit verbunden ist, und dass die Auswerteeinheit zur Berücksichtigung der im Leitungssystem erfassten Fluidmenge bei der Bestimmung der abgegebenen Fluidmenge ausgelegt ist. Bei der erfindungsgemäßen Vorrichtung wird vorgeschlagen, in dem Leitungssystem eine Messeinrichtung vorzusehen, die zum Erfassen der im Leitungssystem enthaltenen Fluidmenge dient, so dass im Leitungssystem enthaltene Gase, die das Messergebnis verfälschen würden, bei der Bestimmung der tatsächlich abgegebenen Fluidmenge nicht berücksichtigt werden.

Um die im Leitungssystem enthaltene Fluidmenge präzise erfassen zu können, wird vorgeschlagen, zwischen dem Tank und dem Leitungssystem ein Tankventil zum Sperren des Leitungssystems vorzusehen und die Messeinrichtung in Strömungsrichtung des abzugebenden Fluids gesehen nach dem Tankventil im Leitungssystem anzuordnen. Sobald die Fluidabgabe abgeschlossen ist, wird das Tankventil gesperrt und das im Leitungssystem eingeschlossene Fluid durch die Messeinrichtung mengenmäßig erfasst, ohne dass die Fluidmengenerfassung von Störfaktoren, die durch die Fluidströmung verursacht sind, beeinflusst wird.

Bei einem bevorzugten Ausführungsbeispiel der Vorrichtung ist im Leitungssystem eine Pumpeinrichtung vorgesehen, mit der das Fluid aus dem Tank in das Leitungssystem gefördert wird. Bei dieser Ausführungsform kann die Messeinrichtung in Strömungsrichtung des abzugebenden Fluids gesehen, bevorzugt nach, aber auch vor der Pumpeinrichtung im Leitungssystem angeordnet werden, um sicherzustellen, dass die aus dem Tank geförderte Fluidmenge, die sich im Leitungssystem nach dem Ende der Fluidabgabe sammelt, erfasst wird.

Bei einer weiteren bevorzugten Ausführungsform der erfindungsgemäßen Vorrichtung ist das Leitungssystem durch ein Ventil, vorzugsweise durch ein Rückschlagventil, in einen ersten und einen sich daran anschließenden zweiten Abschnitt untergliedert, wobei der zweite Abschnitt einen Anschluss für Vollschläuche aufweist. Die Messeinrichtung ist bei dieser Ausführungsform im ersten Abschnitt angeordnet.

Ein derartig untergliedertes Leitungssystem wird insbesondere dann eingesetzt, wenn sogenannte Vollschläuche verwendet werden, die sowohl vor als auch nach der Fluidabgabe vollständig mit Fluid gefüllt sind. Mit Hilfe des Ventils wird sichergestellt, dass der zweite Abschnitt des Leitungssystems immer mit Fluid gefüllt ist, so dass bei einer Fluidabgabe durch diesen zweiten Abschnitt die im zweiten Abschnitt enthaltene Fluidmenge bei der Bestimmung der tatsächlich abgegebenen Fluidmenge nicht mitberücksichtigt werden muss. Gleichzeitig lässt sich dieses Leitungssystem durch die im ersten Abschnitt angeordnete Messeinrichtung in den Fällen verwenden, in denen eine zusätzliche Bestimmung der im ersten Abschnitt des Leitungssystems enthaltenen Fluidmenge erforderlich ist.

So wird bei einer Weiterbildung dieser Ausführungsform vorgeschlagen, an dem ersten Abschnitt des Leitungssystems einen Anschluss für Leerschläuche auszubilden, also Schläuche, die sowohl vor als auch nach der Fluidabgabe vollständig geleert sind.

Bei diesem Ausführungsbeispiel, bei dem das Leitungssystem in zwei Abschnitte untergliedert ist, ist es ferner von Vorteil, wenn nahe dem Schlauchanschluss bzw. nahe der Schlauchanschlüsse jeweils ein Sperrventil im Leitungssystem vorgesehen ist. Mit Hilfe dieses Sperrventils kann der am Schlauchanschluss angeschlossene Schlauch vom Leitungssystem getrennt werden, so dass aussschließlich das im Leitungssystem enthaltene Fluid bei der Mengenbestimmung erfasst wird.

Zum Entlüften des Leitungssystems ist üblicherweise eine Entlüftungsleitung vorgesehen, welche durch ein Entlüftungsventil absperrbar ist und beispielsweise mit dem Tank oder über geeignete Filtereinheiten mit der Umgebung in Verbindung steht. Bei einer besonders bevorzugten Ausführungsform ist diese Entlüftungsleitung mit der am Leitungssystem vorgesehenen Messeinrichtung verbunden, so dass die Messeinrichtung zusätzlich zum Entlüften des Leitungssystems dient.

Die Messeinrichtung weist erfindungsgemäß ein Messrohr auf, das mit dem Leitungssystem in Strömungsverbindung steht. In dieses Messrohr kann entsprechend dem im Leitungssystem wirkenden Fluiddruck das Fluid im Messrohr so weit aufsteigen, dass eine genaue Bestimmung der im Leitungssystem enthaltenen Fluidmenge möglich ist.

Das Messrohr verläuft bei einer Null-Grad-Stellung des Tanks bevorzugt zumindest annähernd vertikal, um das Erfassen der Fluidmenge auf eine definierte Lage des Tanks zu beziehen.

Des weiteren ist vorgesehen, das Messrohr in seiner Länge so zu bemessen, dass es relativ zum Boden des Tanks gesehen in vertikaler Richtung über den Boden des Tanks hinausragt. Auf diese Weise wird ein überlappender Messbereich für den Tank und das Messrohr gebildet, so dass bei niedrigem Fluidniveau im Tank und bei einer Neigung des Tanks sichergestellt ist, dass mit dem Messrohr der Messeinrichtung bereits eine präzise Erfassung der im Leitungssystem enthaltenen Fluidmenge möglich ist.

Als Messeinrichtung wird eine Peileinrichtung eingesetzt, bei der vorzugsweise das Messrohr als Peilrohr ausgebildet ist, in dem vorzugsweise ein Peilstab zum Messen des Fluidniveaus aufgenommen ist. Die Verwendung einer Peileinrichtung als Messeinrichtung hat den Vorteil, dass mit einem vergleichsweise einfachen Aufbau eine sehr präzise Bestimmung der Fluidmenge im Leitungssystem möglich ist.

Bei einer bevorzugten Ausführungsform der Peileinrichtung ist an dem Peilstab ein Schwimmer verschieblich gelagert, der auf dem im Peilrohr enthaltenen Fluid aufschwimmt und dessen Position entlang des Peilstabes erfassbar ist. Die Auswerteeinheit wertet zum Bestimmen des Fluidniveaus in dem Leitungssystem die Position des Schwimmers aus.

Bei einer alternativen Ausführungsform weist die Messeinrichtung eine Ultraschall-Messeinheit oder eine potenziometrisch arbeitende Messeinheit, z.B. mit Peilstab, auf, die das Flüssigkeitsniveau im Messrohr erfasst. Derartige Messeinheiten eignen sich insbesondere dann, wenn eine Messung der Fluidmenge im Leitungssystem von außen vorgenommen werden soll, ohne dass Bauteile der Messeinrichtung im Leitungssystem angeordnet sind.

Das Fluidniveau im Tank wird vorzugsweise durch eine weitere Messeinrichtung erfasst, die mit der Auswerteeinheit verbunden ist. Auch hier kann als Messeinrichtung eine Peileinrichtung eingesetzt werden, die im Inneren des Tanks angeordnet ist. Alternativ ist es auch denkbar, eine Messeinrichtung zu verwenden, die das Fluidniveau im Tank von außerhalb des Tanks ermittelt.

Um ein möglichst schnelles Entleeren des Tanks zu ermöglichen, wird ferner vorgeschlagen, das Leitungssystem durch einen Ablaufstutzen mit dem Tank zu verbinden. Der Ablaufstutzen steht seinerseits durch ein Tankventil mit dem Tank in Verbindung und ist durch ein Ablaufventil nach außen absperrbar. Der Ablaufstutzen kann in unmittelbarer Strömungsverbindung mit dem Leitungssystem stehen. Alternativ ist es auch möglich, zwischen dem Ablaufstutzen und dem Leitungssystem zusätzlich ein Sperrventil vorzusehen, mit dem die Strömungsverbindung des Ablaufstutzens zum Leitungssystem unterbrochen werden kann. Dies ist beispielsweise dann sinnvoll, wenn das Innere des Tanks gereinigt werden soll und die Reinigungsflüssigkeit aus dem Ablaufstutzen abläuft, ohne dass dabei das Leitungssystem von der Reinigungsflüssigkeit durchströmt wird.

Der Ablaufstutzen kann üblicherweise zum Beladen bzw. Füllen des Tanks sowie zur Schwerkraftabgabe genutzt werden.

Damit auch eventuell durch die Temperatur des Fluids verursachte Volumenänderungen erfasst werden können, wird ferner vorgeschlagen, im Leitungssystem einen mit der Auswerteeinheit verbundenen Temperatursensor vorzusehen, mit dem die Temperatur des im Leitungssystem enthaltenen Fluids erfasst werden kann.

Ferner wird vorgeschlagen, am Tank oder am Leitungssystem einen Neigungssensor vorzusehen, der gleichfalls mit der Auswerteeinheit verbunden ist, und dessen Signal dazu verwendet wird, bei einer Neigung des Tanks und/oder des Leitungssystems die von der Auswerteeinheit bestimmte, theoretisch abgegebene Fluidmenge entsprechend dem ermittelten Neigungswinkel zu korrigieren.

Die zuvor beschriebene Vorrichtung wird vorzugsweise bei Tankfahrzeugen eingesetzt, um möglichst genau erfassen zu können, wieviel Fluid, beispielsweise wieviel Benzin, Diesel oder ähnliche präzis zu bestimmende Substanzen, geliefert worden sind.

Die Erfindung wird nachfolgend anhand dreier schematischer Ausführungsbeispiele unter Bezugnahme auf die beigefügte Zeichnung näher erläutert. Darin zeigen:
- Fig. 1: eine schematische Seitenansicht eines ersten Ausführungsbeispieles eines Tanks mit am Leitungssystem vorgesehener Peileinrichtung;
- Fig. 2: eine schematische Seitenansicht eines zweiten Ausführungsbeispieles eines Tanks auf einem Tankfahrzeug, wobei am Leitungssystem des Tanks eine Peileinrichtung vorgesehen ist; und
- Fig. 3: eine schematische Seitenansicht eines dritten Ausführungsbeispieles eines Tanks auf einem Tankfahrzeug, wobei das Leitungssystem des Tanks untergliedert ist und eine Peileinrichtung aufweist.

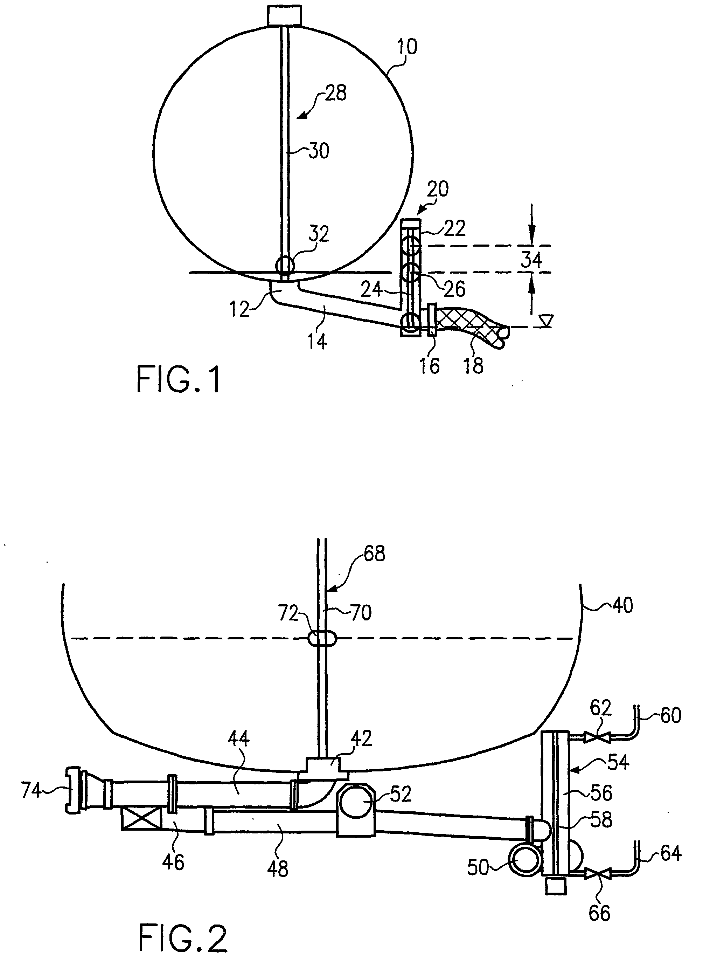

Fig. 1 zeigt ein erstes Ausführungsbeispiel eines Kraftstofftanks 10, bei dem in erfindungsgemäßer Weise die abgegebene Fluidmenge bestimmt werden kann. Der Kraftstofftank 10 weist an seinem Boden ein Bodenventil 12 auf, an dem das eine Ende einer geneigt zur Horizontalen verlaufenden Leitung 14 angeschlossen ist. Am anderen Ende der Leitung 14 ist eine Anschlusskupplung 16 vorgesehen, an die ein Schlauch 18 angekuppelt ist. Nahe der Anschlusskupplung 16 ist an der Leitung 14 eine Peileinrichtung 20 vorgesehen, deren Aufbau nachfolgend erläutert wird.

Die Peileinrichtung 20 weist ein mit der Leitung 14 in Strömungsverbindung stehendes Peilrohr 22 auf, das nahe der Anschlusskupplung 16 angeordnet ist und zumindest annähernd in seiner Längsrichtung vertikal verläuft, wenn der Kraftstofftank 10 etwa horizontal bzw. bei einem Neigungswinkel von annähernd Null Grad angeordnet ist. Im Peilrohr 22 ist ein Peilstab 24 angeordnet, entlang dem ein Schwimmer 26 verschieblich gelagert ist. Sofern sich im Peilrohr 22 ein Fluid befindet, schwimmt der Schwimmer 26 auf dem Flüssigkeitsspiegel des Fluids auf, wobei eine nicht dargestellte Auswerteeinheit die Position des Schwimmers 26 erfasst. In Fig. 1 ist der Schwimmer 26 in einer obersten Position, einer Zwischenposition und einer untersten Position gezeigt.

Im Kraftstofftank 10 ist eine weitere Peileinrichtung 28 angeordnet, die gleichfalls einen Peilstab 30 aufweist, der sich ausgehend vom Bodenventil 12 vertikal nach oben durch den Kraftstofftank 10 erstreckt. Entlang des Peilstabes 30 ist ein zweiter Schwimmer 32 verschieblich gelagert, der auf dem Flüssigkeitsspiegel des im Kraftstofftank 10 enthaltenen Kraftstoffes aufschwimmt und dessen Position entlang des Peilstabes 30 gleichfalls durch die nicht dargestellte Auswerteeinheit erfasst wird.

Wie Fig. 1 ferner zu entnehmen ist, ist das Peilrohr 22 der Peileinrichtung 20 in seiner Länge so bemessen, dass es bezogen auf den Boden des Kraftstofftanks 10 über diesen, nach oben und unten, hinausragt. Auf diese Weise wird ein überlappender Messbereich 34 zwischen der Peileinrichtung 20 und der weiteren Peileinrichtung 28 geschaffen, so dass beispielsweise bei einer geneigten Stellung des Kraftstofftanks 10 sowohl die Peileinrichtung 20 als auch die weitere Peileinrichtung 28 den Flüssigkeitsstand im Kraftstofftank 10 anzeigen können.

Zum Erfassen der abgegebenen Kraftstoffmenge wird bei einem vollen Kraftstofftank 10 von der Auswerteeinheit zunächst nur die Position des zweiten Schwimmers 32 der weiteren Peileinrichtung 28 erfasst. Hierzu wird vor der Fluidabgabe das Flüssigkeitsniveau im Kraftstofftank 10 ermittelt und abgespeichert. Zur Abgabe des Fluids, z.B. des Kraftstoffes, wird anschließend das Bodenventil 12 geöffnet und das Fluid aus dem Kraftstofftank 10 abgelassen, wobei das Fluid durch die Leitung 14 in den Schlauch 18 einströmt. Nach dem Schließen des Bodenventils 12 wird die Leitung 14 beispielsweise durch Lockern der Anschlusskupplung 16 geöffnet, damit eventuell noch in der Leitung 14 und im Schlauch 18 stehendes Fluid durch den Druckausgleich abströmen kann. Anschließend wird von der Auswerteeinheit erneut die Position des zweiten Schwimmers 32 ermittelt und das Fluidniveau im Kraftstofftank 10 erfasst. Mit Hilfe von in der Auswerteeinheit abgespeicherter Volumendaten lässt sich aus der Differenz dieser beiden erfassten Fluidniveaus die aus dem Kraftstofftank 10 abgegebene Fluidmenge bestimmen.

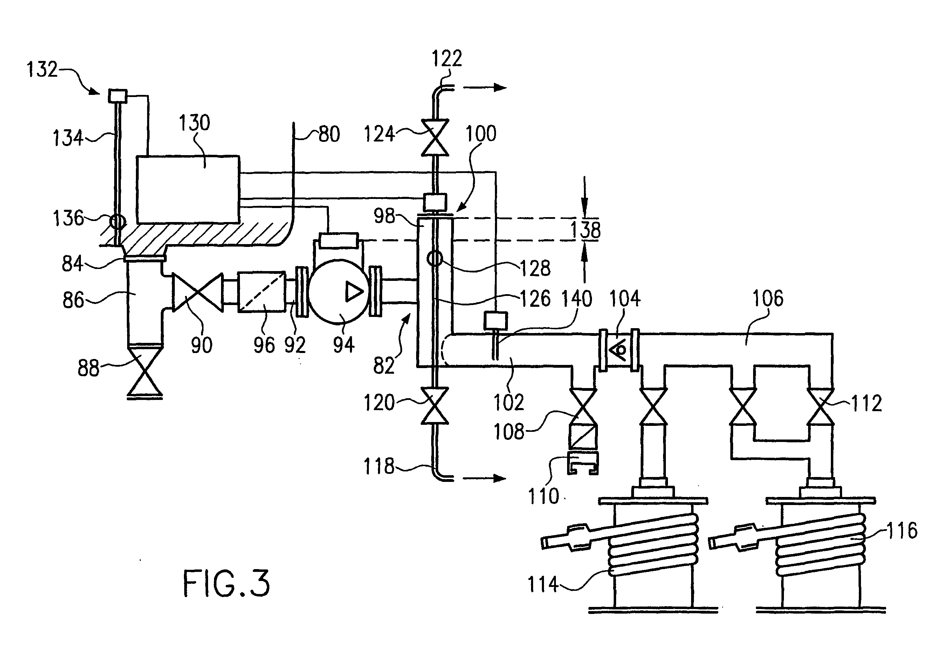

Sollte nun der Kraftstofftank 10 annähernd geleert sein, so dass der zweite Schwimmer 32 der weiteren Peileinrichtung 28 auf Höhe des überlappenden Messbereiches 34 steht, erfasst die Auswerteeinheit das Flüssigkeitsniveau im Kraftstofftank 10 zusätzlich durch die Peileinrichtung 20. Sobald der zweite Schwimmer 32 der weiteren Peileinrichtung 28 in diesen überlappenden Messbereich 34 gelangt, kann von der Auswerteeinheit das Bodenventil 12 gedrosselt werden, damit allenfalls geringe Mengen Gas und Luft in die Leitung 14 durch das einströmende Fluid mitgerissen werden. In dem Augenblick, in dem der zweite Schwimmer 32 am Boden des Kraftstofftanks 10 aufsetzt und nicht mehr ordnungsgemäß das Flüssigkeitsniveau des Fluids anzeigen kann, bestimmt die Auswerteeinheit die Fluidmenge nur mehr über die Peileinrichtung 20. Dabei steigen eventuell in der Leitung 14 im Fluid enthaltene Gase und Luft im Peilrohr 22 auf, wodurch der Schwimmer 26 nach unten gedrückt wird und die tatsächlich in der Leitung 14 enthaltene Fluidmenge anzeigt. Am oberen Ende der Peileinrichtung ist zweckmäßigerweise eine Entlüftungsleitung, wie zu den Fig. 2 und 3 beschrieben, vorgesehen, so dass das exakte Fluidniveau im Peilrohr 22 erfasst wird.

Mit Hilfe des erfindungsgemäßen Verfahrens und der erfindungsgemäßen Vorrichtung ist es möglich, auch bei einem annähernd leeren Kraftstofftank 10 eine exakte Bestimmung der tatsächlich aus dem Kraftstofftank 10 und der Leitung 14 abgegebenen Kraftstoffmenge durchzuführen.

Fig. 2 zeigt in teilweise geschnittener schematischer Seitenansicht ein zweites Ausführungsbeispiel eines Kraftstofftanks 40, der in einzelne Tanksegmente untergliedert ist. An jedem Tanksegment ist durch ein am Boden des Tanksegments vorgesehenes Bodenventil 42 eine an der Unterseite des Kraftstofftanks 40 verlaufende Verrohrung 44 angeschlossen. Die einzelnen Verrohrungen 44 der verschiedenen Tanksegmente sind wiederum an eine gemeinsame Kollektorleitung 46 angeschlossen. Die Kollektorleitung 46 steht ihrerseits mit einer Verrohrung 48 in Strömungsverbindung, an derem der Kollektorleitung 46 abgewandten Ende eine Anschlusskupplung 50 für Schläuche vorgesehen ist. Zwischen den beiden die Verrohrung 48 bildenden Rohren ist eine Pumpe 52 positioniert, die das Fluid aus dem Kraftstofftank 40 fördert und der Anschlusskupplung 50 zuführt. Nahe der Anschlusskupplung 50 ist an der Verrohrung 48 eine erste Peileinrichtung 54 vorgesehen, die ein mit der Verrohrung 48 in Strömungsverbindung stehendes Peilrohr 56 aufweist. Wie bei dem zuvor beschriebenen ersten Ausführungsbeispiel ist im Peilrohr 56 ein Peilstab 58 mit einem daran verschieblich gelagerten Schwimmer (nicht dargestellt) angeordnet. Mit dem Schwimmer kann das Fluidniveau im Peilrohr 56 angezeigt werden, das von einer nicht dargestellten Auswerteeinheit ermittelt wird.

Am oberen Ende des Peilrohres 56 ist ferner eine Entlüftungsleitung 60 angeschlossen, die durch ein Entlüftungsventil 62 gesperrt werden kann. Nahe der Unterseite des Peilrohres 56 ist eine Rückführleitung 64 vorgesehen, die mit dem Kraftstofftank 40 in Verbindung steht und gleichfalls durch ein Sperrventil 66 gesperrt werden kann.

In jedem Tanksegment des Kraftstofftanks 40 ist ferner eine zweite Peileinrichtung 68 vorgesehen, die in gleicher Weise wie die im ersten Ausführungsbeispiel beschriebene Peileinrichtung 28 ausgebildet ist und mit Hilfe eines an einem Peilstab 70 verschieblich gelagerten Schwimmers 72 das Fluidniveau betreffenden Tanksegment des Kraftstofftanks 40 anzeigen kann. Die Position des Schwimmers 72 wird gleichfalls durch die nicht dargestellte Auswerteeinheit erfasst.

Wird nun Fluid aus dem Kraftstofftank 40 abgegeben bzw. abgelassen, wird zunächst das Fluidniveau im betreffenden Tanksegment des Kraftstofftanks 40 erfasst und anschließend das Bodenventil 42 geöffnet. Gleichzeitig wird die Pumpe 52 aktiviert, die das Fluid aus dem Kraftstofftank 40 fördert und durch die Anschlusskupplung 50 in den nicht dargestellten Schlauch transportiert.

Sollte nun das Fluidniveau im Tanksegment 40 so stark absinken, dass das Tanksegment annähernd leer ist, wertet die Auswerteeinheit zusätzlich die Position des Schwimmers der ersten Peileinrichtung 54 aus. Gleichzeitig wird die Pumpleistung gedrosselt, gegebenenfalls auch das Bodenventil 42 gedrosselt, damit weniger Gas und Luft in die Verrohrung 44 eingesaugt wird.

Sobald die zweite Peileinrichtung 68 im Kraftstofftank 40 nicht mehr ordnungsgemäß das Fluidniveau im Kraftstofftank 40 anzeigen kann, kann die Auswerteeinheit aus der Position des Schwimmers der ersten Peileinrichtung 54 erfassen, wieviel Fluid in der Verrohrung 48, in der Kollektorleitung 46 und in der Verrohrung 44 noch enthalten ist. Eventuell im Fluid enthaltenes Gas, das sich im Peilrohr 56 der Peileinrichtung 54 gesammelt hat, wird über die Entlüftungsleitung 60 abgeführt. Die Entlüftung im Peilrohr 54 wird intermittierend durch insbesondere automatisches Öffnen des Entlüftungsventils 62 durchgeführt. Insbesondere dann, wenn der Schwimmer unter das höchste Niveau im Peilrohr 54 abgesunken ist. Das präzise Erfassen des Flüssigkeitsniveaus im Peilrohr 56 erfolgt zudem bei ruhender Pumpe 52.

Auf diese Weise kann präzise angegeben werden, wieviel Fluid noch im Leitungssystem des Kraftstofftanks 40 enthalten ist, so dass die Auswerteeinheit auf Grundlage des vor der Fluidabgabe ermittelten Fluidniveaus im betreffenden Tanksegment des Kraftstofftanks 40, das durch die zweite Peileinrichtung 68 angegeben worden war, sowie dem Fluidniveau, das nach der Fluidabgabe im Tanksegment und im Leitungssystem des Kraftstofftanks 40 enthalten ist, die abgegebene Fluidmenge präzise bestimmen kann.

Sollte die Anschlusskupplung 50 zusätzlich mit einem nicht dargestellten Ventil versehen sein, wird unmittelbar nach dem Öffnen des Bodenventils 42 das Entlüftungsventil 62 geöffnet, so dass das in der Verrohrung 44 enthaltenes Gas und Luft durch die Entlüftungsleitung 60 beispielsweise in den Kraftstofftank 40 abströmen kann. Sobald das Fluid im Peilrohr 56 der ersten Peilvorrichtung 54 einen bestimmten, oberen Schwellwert erreicht hat, wird das Entlüftungsventil 62 geschlossen.

Sollte nach der Fluidabgabe noch Fluid in der Verrohrung 44, 46 und 48 enthalten sein, während gleichzeitig das an der Anschlusskupplung vorgesehene Ventil geschlossen ist, kann das Fluid über die Rückführleitung 64 wieder in den Kraftstofftank 40 zurückgeleitet werden.

Um das entsprechende Tanksegment des Kraftstofftanks 40 vollständig entleeren zu können, ist an der Verrohrung 44 nahe der Kollektorleitung 46 zusätzlich eine Trockenkupplung 74 vorgesehen, durch die das Fluid aus dem Tanksegment abgelassen werden kann, wobei beispielsweise mit einem nicht dargestellten Ventil, die Strömungsverbindung zwischen der Verrohrung 44 und der Kollektorleitung 46 unterbrochen werden kann. Des weiteren kann mit Hilfe eines nicht dargestellten Neigungssensors die Neigung des Kraftstofftanks 40 erfasst werden, so dass bei der Auswertung der Positionen der Schwimmer der beiden Peileinrichtungen 54 und 68 die Auswerteeinheit die sich durch die Neigung ergebende Verlagerung des Fluidniveaus zusätzlich berücksichtigen kann. Des weiteren ist es möglich, mit Hilfe eines nicht dargestellten Temperatursensors die Temperatur des Fluids im Kraftstofftank 40 zu erfassen, um durch die Temperatur verursachte Volumenänderungen des Fluids bei der Auswertung der abgegebenen Fluidmenge mit zu berücksichtigen.

In Fig. 3 ist eine teilweise geschnittene schematische Seitenansicht eines dritten Ausführungsbeispieles eines Kraftstofftanks 80 gezeigt, an dessen Leitungssystem 82 sogenannte Leerschläuche und gleichzeitig sogenannte Vollschläuche angeschlossen werden können, wie später noch erläutert wird. Der Kraftstofftank 80 weist gleichfalls an seinem Boden ein Bodenventil 84 auf, an das ein Auslassstutzen 86 angeschlossen ist. Der Auslassstutzen 86 ist durch ein Auslassventil 88 verschließbar. Des Weiteren weist der Auslassstutzen 86 eine Verzweigung auf, an die ein Durchgangsventil 90 angeschlossen ist. Das Durchgangsventil 90 steht seinerseits mit einer Verrohrung 92 in Verbindung, in die eine Pumpe 94 und ein Filter 96 eingesetzt sind. Die Verrohrung 92 ist an das Peilrohr 98 einer Peileinrichtung 100 angeschlossen. Die Peileinrichtung 100 ist Bestandteil des Leitungssystems 82, wobei das Peilrohr 98 mit seinem vertikalen unteren Ende in einen ersten Leitungsabschnitt 102 übergeht. An den ersten Leitungsabschnitt 102 ist durch ein Rückschlagventil 104 ein zweiter Leitungsabschnitt 106 angeschlossen.

Der erste Leitungsabschnitt 102 weist ein Sperrventil 108 auf, an das eine Anschlusskupplung 110 für einen Leerschlauch (nicht dargestellt) befestigt ist. Unter Leerschlauch wird in diesem Zusammenhang ein Schlauch verstanden, der sowohl vor als auch nach der Fluidabgabe vollständig entleert ist.

Der zweite Leitungsabschnitt 106 ist mit insgesamt drei Sperrventilen 112 ausgestattet, wobei eines der Sperrventile 112 mit einem Vollschlauch 114 in Strömungsverbindung steht, während die beiden anderen Sperrventile 112 mit einem Vollschlauch 116 in Strömungsverbindung stehen. Unter dem Begriff Vollschlauch wird in diesem Zusammenhang ein Schlauch verstanden, der sowohl vor als auch nach der Fluidabgabe vollständig mit Fluid gefüllt ist. Um dies sicherzustellen ist auch der zweite Leitungsabschnitt 106 vollständig mit Fluid gefüllt, wobei das Rückschlagventil 104 ein Zurückströmen des Fluids vom zweiten Leitungsabschnitt 106 in den ersten Leitungsabschnitt 102 verhindert.

Am vertikalen unteren Ende des Peilrohres 98 ist ferner eine Rückführleitung 118 angeschlossen, die mit dem Kraftstofftank 80 in Verbindung steht und durch ein Rückführventil 120 unterbrochen werden kann. Am vertikalen oberen Ende des Peilrohres 98 ist eine Entlüftungsleitung 122 angeschlossen, die gleichfalls mit dem Kraftstofftank 80 in Strömungsverbindung stehen kann und durch ein Entlüftungsventil 124 unterbrochen werden kann.

Im Peilrohr 98 der Peileinrichtung 100 ist ein Peilstab 126 aufgenommen, entlang dem ein Schwimmer 128 verschieblich gelagert ist, der auf dem im Peilrohr 98 enthaltenen Fluid aufschwimmt und an eine Auswerteeinheit 130 ein entsprechendes Signal abgibt.

An die Auswerteeinheit 130 ist ferner eine im Kraftstofftank 80 aufgenommene zweite Peileinrichtung 132 angeschlossen, die gleichfalls einen Peilstab 134 aufweist, entlang dem ein Schwimmer 136 verschieblich gelagert ist, mit dem das Fluidniveau im Kraftstofftank 80 angezeigt werden kann.

Wie bei dem ersten Ausführungsbeispiel ist das Peilrohr 98 in seiner Länge so bemessen, dass die erste Peileinrichtung 100 mit der zweiten Peileinrichtung 132 einen sich überlappenden Messbereich 138 bildet.

Die Auswerteeinheit 130 ist ferner an die Steuerung der Pumpe 34 angeschlossen und steht mit einem Temperatursensor 140 in Verbindung, der die Fluidtemperatur im ersten Leitungsabschnitt 102 erfasst.

Soll nun durch den an der Anschlusskupplung 110 angekuppelten Leerschlauch (nicht dargestellt) Fluid aus dem Kraftstofftank 80 gefördert werden, wird zunächst über die Rückführleitung 118 der erste Leitungsabschnitt 102 geleert, sofern dies erforderlich ist. Anschließend wird das Bodenventil 84, das Durchgangsventil 90 und das Entlüftungsventil 124 geöffnet und die Pumpe 94 gestartet.

Das Fluid strömt nun aus dem Kraftstofftank 80 in den ersten Leitungsabschnitt 102 ein, wobei das Peilrohr 98 gefüllt wird. Wenn der Schwimmer 128 der ersten Peileinrichtung 100 eine maximal zulässige Position erreicht hat, in der der Schwimmer 128 an der oberen Messgrenze des Messbereichs 138 im Peilrohr 98 steht, wird das Entlüftungsventil 124 geschlossen. Die Peileinrichtung 100 zeigt nun einen Maximalstand an, während gleichzeitig das Fluid aus dem Kraftstofftank 80 in den Leerschlauch einströmt.

Sobald nun die zweite Peileinrichtung 132 ein Füllniveau im Kraftstofftank 80 erfasst, das im Messbereich 138 liegt, wird die Leistung der Pumpe 94 gedrosselt, um zu verhindern, dass Luft und Gas in das Leitungssystem 82 gefördert wird.

Da bereits Luft und Gas in das Leitungssystem 82 hinein gefördert sein können, sinkt im Peilrohr 98 der Peileinrichtung 100 der Schwimmer leicht ab, wodurch angezeigt wird, dass im Leitungssystem 82 Luft enthalten ist. Die Entlüftung erfolgt über das Entlüftungsventil 124 und die Leitung 122.

Sinkt der Schwimmer im Peilrohr 98 unter einen vorgegebenen Wert, wird das Sperrventil 108 des ersten Leistungsabschnittes 102 geschlossen, und die Pumpe 94 abgestellt.

Aus dem Füllstand im Kraftstofftank 80 vor der Fluidabgabe, dem bekannten Volumen des Leitungssystems 82 und dem neuen Füllstand im Peilrohr 98 sowie gegebenenfalls ermittelten Neigungsmesswerten, kann nun die tatsächlich abgegebene Fluidmenge von der Auswerteeinheit 130 präzis berechnet werden. Der nicht dargestellte Leerschlauch wird entleert, indem die Verschraubung an der Anschlusskupplung 110 leicht gelockert wird, so dass Luft in den Leerschlauch eindringen kann.

Wird das entsprechende Tanksegment restlos entleert, einschließlich dem Leitungssystem 82, wird so lange gepumpt, bis die Peilmessung im Peilrohr 98 den Minimalstand anzeigt. Bei weiterer Abgabe per Schwerkraft kann der Schwimmer 128 am Boden des Peilrohres 98 aufliegen.

Soll Fluid aus dem Kraftstofftank 80 durch die Vollschläuche 114 und 116 abgegeben werden, wird das Bodenventil 84 und das entsprechende Sperrventil 112 geöffnet. Vorher wurde das Leitungssystem 82 durch die Entlüftungsleitung 122 in der zuvor beschriebenen Weise entlüftet. Gleichzeitig wird die Pumpe 94 aktiviert, die das Fluid in das Leitungssystem 82 fördert. Sobald die Peileinrichtung 100 erfasst, dass Luft und Gas in das Leitungssystem 82 gelangen, wird zunächst die Pumpleistung reduziert und nachfolgend das Durchgangsventil 90 und das Sperrventil 112 geschlossen, um ein Eintreten von Gas und Luft in den zweiten Leitungsabschnitt 106 zu verhindern.

Aus dem vor der Fluidabgabe durch die zweite Peileinrichtung 132 ermittelten Fluidniveau und aus dem nach der Fluidabgabe durch die erste Peileinrichtung 100 angegebenen Fluidniveau kann nun die aktuell abgegebene Fluidmenge durch die Auswerteeinheit 130 bestimmt werden. Dabei können auch zusätzlich von einem nicht dargestellten Neigungssensor ermittelte Neigungswerte des Kraftstofftanks 80 berücksichtigt werden, wie zuvor bereits erläutert wurde.

Bei diesen beiden zuvor beschriebenen Messverfahren ist es ferner möglich, mit Hilfe des Temperatursensors 140 die Temperatur des Fluids zu erfassen, so dass durch die Auswerteeinheit 130 eine entsprechende Temperaturkompensation bei der Bestimmung der aktuell abgegebenen Fluidmenge vorgenommen werden kann.

Soll der Kraftstofftank 80 vollständig entleert werden, net. Dabei spricht ein am Auslassstutzen 86 vorgesehener, nicht dargestellter Leermeldesensor an, sobald das Fluid aus dem Kraftstofftank 80 vollständig abgelaufen ist. Sollte der Leermeldesensor eine Fehlfunktion zeigen, besteht die Möglichkeit, das Durchgangsventil 90 zu öffnen, wenn gleichzeitig das Auslassventil 88 geschlossen ist. Das Fluid strömt dann in das Leitungssystem 82 ein, wobei die Peileinrichtung 110 die exakte Fluidmenge bestimmen kann. Das Fluid kann anschließend durch die Anschlusskupplung 110 abgelassen werden.

Das zuvor beschriebene Ausführungsbeispiel kann auch mit einem Kraftstofftank verwendet werden, der in einzelne Tanksegmente untergliedert ist, wobei in jedem Tanksegment beispielsweise ein anderer Kraftstoff enthalten sein kann. Das Leitungssystem 82 ist in diesem Fall durch eine Kollektorleitung mit den einzelnen Tanksegmenten verbunden. Um ein Vermischen der verschiedenen Kraftstoffarten zu verhindern, kann der erste Leitungsabschnitt 102 des Leitungssystems 82 mit Hilfe der Rückführleitung 118 vor jeder neuen Fluidabgabe geleert werden.

## Patentansprüche

1. Verfahren zum Bestimmen der durch ein Leitungssystem aus einem Tank, insbesondere aus einem Kraftstofftank, abgegebenen Fluidmenge,
- bei dem zum Bestimmen der abgegebenen Fluidmenge die vor der Fluidabgabe im Tank (10; 40; 80) enthaltene Fluidmenge mit der nach der Fluidabgabe im Tank (10; 40; 80) enthaltenen Fluidmenge verrechnet wird,
- die in dem Leitungssystem (14; 44, 46, 48; 82) enthaltene Fluidmenge erfasst wird, und
- die im Leitungssystem (14; 44, 46, 48; 82) enthaltene Fluidmenge bei der Bestimmung der abgegebenen Fluidmenge mitberücksichtigt wird,
**dadurch gekennzeichnet, dass**
- die im Leitungssystem (14; 44, 46, 48; 82) enthaltene Fluidmenge im Leitungssystem peileinrichtungsmäßig erfasst wird,
- wobei ein mit dem Leitungssystem (14; 48; 82) in Strömungsverbindung stehendes Messrohr (22; 56; 98) eingesetzt wird,
- welches zum Bilden eines überlappenden Messbereiches für den Tank (10; 40; 80) und das Messrohr (22; 56; 98) in seiner Länge so bemessen wird, dass es relativ zum Boden des Tanks (10; 40; 80) gesehen in vertikaler Richtung über den Boden des Tanks (10; 40; 80) hinausragt.

2. Verfahren nach Anspruch 1,
**dadurch gekennzeichnet,**
**dass** die im Leitungssystem (14; 44, 46, 48; 82) enthaltene Fluidmenge erfasst wird, nachdem die Strömungsverbindung vom Tank (10; 40; 80) in das Leitungssystem (14; 44, 46, 48; 82) unterbrochen worden ist.

3. Verfahren nach Anspruch 1 oder 2,
**dadurch gekennzeichnet,**
**dass** bei der Bestimmung der abgegebenen Fluidmenge die vor der Fluidabgabe im Leitungssystem (14; 44, 46, 48; 82) enthaltene Fluidmenge mit der nach der Fluidabgabe im Leitungssystem (14; 44, 46, 48; 82) enthaltenen Fluidmenge verrechnet wird.

4. Verfahren nach einem der Ansprüche 1 bis 3,
**dadurch gekennzeichnet,**
**dass** fluidleere Abschnitte (102) des Leitungssystems (14; 44, 46, 48; 82) vor und nach der Fluidabgabe erfasst werden und bei der Bestimmung der insgesamt vom Tank (10) und Leitungssystem (14; 44, 46, 48; 82) abgegebenen Fluidmenge berücksichtigt werden.

5. Verfahren nach einem der vorhergehenden Ansprüche,
**dadurch gekennzeichnet,**
**dass** die im Leitungssystem (14; 44, 46, 48; 82) enthaltene Fluidmenge nur dann bei der Bestimmung der abgegebenen Fluidmenge mitberücksichtigt wird, wenn die im Tank (10; 40, 80) enthaltene Fluidmenge kleiner oder gleich einem vorgegebenen Schwellwert ist.

6. Verfahren nach einem der vorhergehenden Ansprüche,
**dadurch gekennzeichnet,**
**dass** die nach dem Ende der Fluidabgabe im Leitungssystem (14; 44, 46, 48; 82) enthaltene Fluidmenge wieder in den Tank (10; 40; 80) zurückgefördert wird.

7. Verfahren nach einem der vorhergehenden Ansprüche,
**dadurch gekennzeichnet,**
**dass** bei der Fluidabgabe die Neigung des Tanks (10; 40; 80) und/oder die Neigung des Leitungssystems (14; 44, 46, 48; 82) erfasst wird und
**dass** bei der Bestimmung der tatsächlich abgegebenen Fluidmenge die zuvor theoretisch bestimmte Fluidmenge entsprechend der ermittelten Neigung korrigiert wird.

8. Verfahren nach einem der vorhergehenden Ansprüche,
**dadurch gekennzeichnet,**
**dass** bei einem vollständigen Entleeren des Tanks (10; 40; 80) über einen Auslass (74; 86) der Auslass (74; 86) mit dem Leitungssystem (14; 44, 46, 48; 82) verbunden wird und
**dass** zum Erfassen des vollständigen Entleerens des Tanks (10; 40; 80) die im Leitungssystem (14; 44, 46, 48; 82) enthaltene Fluidmenge kontinuierlich erfasst wird.

9. Verfahren nach einem der vorhergehenden Ansprüche,
**dadurch gekennzeichnet,**
**dass** die Temperatur des Fluids erfasst wird und dass bei der Bestimmung der tatsächlich abgegebenen Fluidmenge die zuvor theoretisch bestimmte Fluidmenge entsprechend der Temperatur des Fluides korrigiert wird.

10. Vorrichtung zum Bestimmen der durch ein Leitungssystem aus einem Tank, insbesondere aus einem Kraftstofftank, abgegebenen Fluidmenge,
- mit einer Auswerteeinheit (130), die zum Bestimmen der abgegebenen Fluidmenge die vor der Fluidabgabe im Tank enthaltene Fluidmenge mit der nach der Fluidabgabe im Tank (10; 40; 80) enthaltenen Fluidmenge verrechnet, und
- mit einer in dem Leitungssystem (14; 44, 46, 48; 82) vorgesehenen Messeinrichtung (20; 54; 100) zum Erfassen der im Leitungssystem (14; 44, 46, 48; 82) enthaltenen Fluidmenge, die mit der Auswerteeinheit (130) verbunden ist,
- wobei die Auswerteeinheit (130) zur Berücksichtigung der im Leitungssystem (14; 44, 46, 48; 82) erfassten Fluidmenge bei der Bestimmung der abgegebenen Fluidmenge ausgelegt ist,
- insbesondere zur Durchführung des Verfahrens nach einem der Ansprüche 1 bis 9,
**dadurch gekennzeichnet,**
- **dass** die Messeinrichtung (20; 54; 100) zum Erfassen der im Leitungssystem (14; 44, 46, 48; 82) enthaltenen Fluidmenge als Peileinrichtung (20; 54; 100) ausgebildet ist, und
- **dass** die Peileinrichtung (20; 54; 100) ein Messrohr (22; 56; 98) aufweist, das mit dem Leitungssystem (14; 48; 82) in Strömungsverbindung steht, und das zum Bilden eines überlappenden Messbereiches für den Tank (10; 40; 80) und das Messrohr (22; 56; 98) in seiner Länge so bemessen ist, dass es relativ zum Boden des Tanks (10; 40; 80) gesehen in vertikaler Richtung über den Boden des Tanks (10; 40; 80) hinausragt.

11. Vorrichtung nach Anspruch 10,
**dadurch gekennzeichnet,**
**dass** zwischen dem Tank (10; 40; 80) und dem Leitungssystem (14; 44, 46, 48; 82) ein Tankventil (12; 42; 84) zum Sperren des Leitungssystems (14; 44, 46, 48; 82) vorgesehen ist und dass die Peileinrichtung (20; 54; 100) in Strömungsrichtung des abzugebenden Fluids gesehen nach dem Tankventil (12; 42; 84) im Leitungssystem (14; 44, 46, 48; 82) angeordnet ist.

12. Vorrichtung nach Anspruch 10 oder 11,
**dadurch gekennzeichnet,**
**dass** im Leitungssystem (44, 46, 48; 82) eine Pumpeinrichtung (52; 94) vorgesehen ist und
**dass** die Peileinrichtung (54; 100) in Strömungsrichtung des abzugebenden Fluids gesehen bevorzugt nach, gegebenenfalls auch vor der Pumpeinrichtung (52, 94) im Leitungssystem (44, 46, 48; 82) angeordnet ist.

13. Vorrichtung nach Anspruch 10, 11 oder 12,
**dadurch gekennzeichnet,**
**dass** das Leitungssystem (82) durch ein Ventil, vorzugsweise durch ein Rückschlagventil (104), in einen ersten und einen sich daran anschließenden zweiten Abschnitt (102, 106) untergliedert ist, wobei der zweite Abschnitt (106) einen Anschluss für Vollschläuche (114, 116) aufweist und
**dass** die Peileinrichtung (100) im ersten Abschnitt (102) angeordnet ist.

14. Vorrichtung nach Anspruch 13,
**dadurch gekennzeichnet,**
**dass** der erste Abschnitt (102) einen Anschluss (110) für Leerschläuche aufweist.

15. Vorrichtung nach Anspruch 13 oder 14,
**dadurch gekennzeichnet,**
**dass** nahe dem Schlauchanschluss (110) für Leerschläuche bzw. nahe der Schlauchanschlüsse für Vollschläuche jeweils ein Sperrventil (108, 112) im Leitungssystem (82) vorgesehen ist.

16. Vorrichtung nach einem der Ansprüche 10 bis 15,
**dadurch gekennzeichnet,**
**dass** das Messrohr (22; 56; 98) bei Null-Grad-Stellung des Tanks (19; 40; 80) zumindest annähernd vertikal verläuft.

17. Vorrichtung nach einem der Ansprüche 10 bis 16,
**dadurch gekennzeichnet,**
**dass** das Messrohr als Peilrohr (22; 56; 98) der Peileinrichtung (20; 54; 100) ausgebildet ist, die einen im Peilrohr (22; 56; 98) aufgenommenen Peilstab (24; 58; 126) zum Messen des Fluidniveaus aufweist.

18. Vorrichtung nach einem der Ansprüche 10 bis 17,
**dadurch gekennzeichnet,**
**dass** eine weitere Messeinrichtung, vorzugsweise eine Peileinrichtung (28; 68; 132), vorgesehen ist, mit der das Fluidniveau im Tank (10; 40; 80) erfassbar ist und die mit der Auswerteeinheit (130) verbunden ist.

19. Vorrichtung nach einem der Ansprüche 10 bis 18,
**dadurch gekennzeichnet,**
**dass** das Leitungssystem (82) durch einen Ablaufstutzen (86) mit dem Tank (80) verbunden ist,
**dass** der Ablaufstutzen (86) durch das Tankventil (84) mit dem Tank (80) in Verbindung steht und
**dass** der Ablaufstutzen (86) über ein Ablaufventil (88) nach außen absperrbar ist.

20. Vorrichtung nach Anspruch 19,
**dadurch gekennzeichnet,**
**dass** zwischen dem Ablaufstutzen (86) und dem Leitungssystem (82) ein Sperrventil (90) zum Sperren des Leitungssystems (82) vorgesehen ist.

21. Tankfahrzeug, insbesondere Kraftstofftankfahrzeug, mit einer Vorrichtung nach einem der vorhergehenden Ansprüche 10 bis 20.

## Claims

1. Method for determining the quantity of fluid discharged from a tank, in particular from a fuel tank, via a line system,
- wherein the quantity of fluid contained inside the tank (10; 40; 80) before fluid discharge is offset against the quantity of fluid remaining inside the tank (10; 40; 80) after fluid discharge in order to determine the discharged quantity of fluid,
- the quantity of fluid contained inside the line system (14; 44, 46, 48; 82) is detected and
- the quantity of fluid contained inside the line system (14; 44, 46, 48; 82) is taken into consideration when determining the discharged quantity of fluid,
**characterized in that**
- the quantity of fluid contained inside the line system (14; 44, 46, 48; 82) is detected in the line system by a gauging device,
- wherein a measuring tube (22; 56; 98) is used, which is in flow connection with the line system (14; 48; 82),
- which measuring tube (22; 56; 98) is dimensioned in its length such that it projects in the vertical direction, seen with respect to the bottom of the tank (10; 40; 80), from the bottom of the tank (10; 40; 80) for forming an overlapping measuring range for the tank (10; 40; 80) and the measuring tube (22; 56; 98).

2. Method according to claim 1,
**characterized in that**
the quantity of fluid contained inside the line system (14; 44, 46, 48; 82) is detected after the flow connection of the tank (10; 40; 80) to the line system (14; 44, 46, 48; 82) has been interrupted.

3. Method according to claim 1 or 2,
**characterized in that**
the quantity of fluid contained inside the line system (14; 44, 46, 48; 82) before fluid discharge is offset against the quantity of fluid remaining inside the line system (14; 44, 46, 48; 82) after fluid discharge when determining the discharged quantity of fluid.

4. Method according to any one of claims 1 to 3,
**characterized in that**
fluid-free sections (102) of the line system (14; 44, 46, 48; 82) are detected before and after fluid discharge and are taken into consideration when determining the quantity of fluid discharged in total from the tank (10) and the line system (14; 44, 46, 48; 82).

5. Method according to any one of the preceding claims,
**characterized in that**
when determining the discharged quantity of fluid the quantity of fluid contained inside the line system (14; 44, 46, 48; 82) is only taken into consideration if the quantity of fluid contained inside the tank (10; 40, 80) is smaller than or equal to a predetermined threshold value.

6. Method according to any one of the preceding claims,
**characterized in that**
the quantity of fluid contained inside the line system (14; 44, 46, 48; 82) after completion of the fluid discharge is reconveyed into the tank (10; 40; 80).

7. Method according to any one of the preceding claims,
**characterized in that**
the inclination of the tank (10; 40; 80) and/or the inclination of the line system (14; 44, 46, 48; 82) is detected during the fluid discharge and
when determining the quantity of fluid actually discharged the quantity of fluid that was determined theoretically beforehand is corrected according to the detected inclination.

8. Method according to any one of the preceding claims,
**characterized in that**
when the tank (10; 40; 80) is completely emptied via a discharge (74; 86) the discharge (74; 86) is connected with the line system (14; 44, 46, 48; 82) and
the quantity of fluid contained inside the line system (14; 44, 46, 48; 82) is detected continuously in order to detect the complete emptying of the tank (10; 40; 80).

9. Method according to any one of the preceding claims,
**characterized in that**
the temperature of the fluid is detected and when determining the quantity of fluid actually discharged the quantity of fluid that was determined theoretically beforehand is corrected according to the temperature of the fluid.

10. Device for determining the quantity of fluid discharged from a tank, in particular from a fuel tank, via a line system,
- comprising an evaluation unit (130) which offsets the quantity of fluid contained inside the tank before fluid discharge against the quantity of fluid remaining inside the tank (10; 40; 80) after fluid discharge in order to determine the discharged quantity of fluid,
- comprising a measuring device (20; 54; 100) provided in the line system (14; 44, 46, 48; 82) for detecting the quantity of fluid contained inside the line system (14; 44, 46, 48; 82), which is connected to the evaluation unit (130),
- the evaluation unit (130) being designed to take into consideration the quantity of fluid detected inside the line system (14; 44, 46, 48; 82) when determining the discharged quantity of fluid,
- in particular for performing the method according to any one of claims 1 to 9,
**characterized in that**
- the measuring device (20; 54; 100) is designed as a gauging device (20; 54; 100) for detecting the quantity of fluid contained inside the line system (14; 44; 46, 48; 82) and
- the gauging device (20; 54; 100) has a measuring tube (22; 56; 98) which is in flow connection with the line system (14; 48; 82) and which is dimensioned in its length such that it projects in the vertical direction, seen with respect to the bottom of the tank (10; 40; 80), from the bottom of the tank (10; 40; 80) for forming an overlapping measuring range for the tank (10; 40; 80) and the measuring tube (22; 56; 98).

11. Device according to claim 10,
**characterized in that**
a tank valve (12; 42; 84) is provided between the tank (10; 40; 80) and the line system (14; 44, 46, 48; 82) for blocking the line system (14; 44, 46, 48; 82) and, seen in the flow direction of the fluid to be discharged, the gauging device (20; 54; 100) is disposed after the tank valve (12; 42; 84) in the line system (14; 44, 46, 48; 82).

12. Device according to claim 10 or 11,
**characterized in that**
a pumping device (52; 94) is provided in the line system (44, 46, 48; 82) and, seen in the flow direction of the fluid to be discharged, the gauging device (54; 100) is arranged preferably after or optionally before the pumping device (52, 94) in the line system (44, 46, 48; 82).

13. Device according to claim 10, 11 or 12,
**characterized in that**
the line system (82) is divided by a valve, preferably by a check valve (104), into a first and a subsequent second section (102, 106), the second section (106) having a connection for full pipes (114, 116), and
**in that** the gauging device (100) is arranged in the first section (102).

14. Device according to claim 13,
**characterized in that**
the first section (102) has a connection (110) for empty pipes.

15. Device according to claim 13 or 14,
**characterized in that**
a stop valve (108, 112) is each provided in the line system (82) near the pipe connection (110) for empty pipes and respectively near the pipe connections for full pipes.

16. Device according to any one of claims 10 to 15,
**characterized in that**
when the tank (19; 40; 80) is in the zero-degree position the measuring tube (22; 56; 98) extends at least approximately vertically.

17. Device according to any one of claims 10 to 16,
**characterized in that**
the measuring tube is designed as a gauge tube (22; 56; 98) of the gauging device (20; 54; 100) which has a gauge stick (24; 58; 126) accommodated in the gauge tube (22; 56; 98) for measuring the fluid level.

18. Device according to any one of claims 10 to 17,
**characterized in that**
a further measuring device, preferably a gauging device (28; 68; 132), is provided by means of which the fluid level in the tank (10; 40; 80) can be detected and which is connected to the evaluation unit (130).

19. Device according to any one of claims 10 to 18,
**characterized in that**
the line system (82) is connected to the tank (80) by means of a discharge connection (86),
the discharge connection (86) is connected to the tank (80) by means of the tank valve (84) and
the discharge connection (86) can be blocked to the outside by means of a discharge valve (88).

20. Device according to claim 19,
**characterized in that**
a stop valve (90) is provided between the discharge connection (86) and the line system (82) for blocking the line system (82).

21. Tanker vehicle, in particular fuel tanker vehicle, comprising a device according to any one of the preceding claims 10 to 20.

## Revendications

1. Procédé de détermination de la quantité de fluide délivrée à travers un système de conduites depuis un réservoir, en particulier un réservoir de carburant,
- dans lequel, pour déterminer la quantité de fluide délivrée, la quantité de fluide contenue dans le réservoir (10 ; 40 ; 80) avant la délivrance du fluide est comparée à la quantité de fluide contenue dans le réservoir (10 ; 40 ; 80) après la délivrance du fluide,
- la quantité de fluide contenue dans le système de conduites (14; 44, 46, 48 ; 82) est relevée, et
- la quantité de fluide contenue dans le système de conduites (14; 44, 46, 48 ; 82) est prise en compte dans la détermination de la quantité de fluide délivrée,
***caractérisé en ce que***
- la quantité de fluide contenue dans le système de conduites (14; 44, 46, 48 ; 82) est relevée à la manière d'un dispositif de niveau,
- un tube de mesure (22 ; 56 ; 98) en communication d'écoulement avec le système de conduites (14 ; 44, 46, 48 ; 82) étant utilisé,
- qui, pour former une zone de mesure en chevauchement pour le réservoir (10 ; 40 ; 80) et le tube de mesure (22 ; 56 ; 98), présente une longueur telle qu'il forme saillie au-dessus du fond du réservoir (10 ; 40 ; 80) dans la direction verticale en regardant par rapport au fond du réservoir (10 ; 40 ; 80).

2. Procédé selon la revendication 1, ***caractérisé en ce que*** la quantité de fluide contenue dans le système de conduites (14 ; 44, 46, 48 ; 82) est relevée après que la communication d'écoulement entre le réservoir (10 ; 40 ; 80) et le système de conduites (14 ; 44, 46, 48 ; 82) ait été interrompue.

3. Procédé selon la revendication 1 ou 2, ***caractérisé en ce que,*** lors de la détermination de la quantité de fluide délivrée, la quantité de fluide contenue dans le système de conduites (14 ; 44, 46, 48 ; 82) avant la délivrance du fluide est comparée à la quantité de fluide contenue dans le système de conduites (14 ; 44, 46, 48 ; 82) après la délivrance du fluide.

4. Procédé selon l'une quelconque des revendications 1 à 3, ***caractérisé en ce que*** des sections (102) du système de conduites (14 ; 44, 46, 48 ; 82) vides de fluide sont relevées avant et après la délivrance du fluide et prises en compte lors de la détermination de la quantité de fluide délivrée au total par le réservoir (10) et le système de conduites (14; 44, 46, 48 ; 82).

5. Procédé selon l'une quelconque des revendications précédentes, ***caractérisé en ce que*** la quantité de fluide contenue dans le système de conduites (14 ; 44, 46, 48 ; 82) n'est prise en compte dans la détermination de la quantité de fluide délivrée que lorsque la quantité de fluide contenue dans le réservoir (10 ; 40, 80) est inférieure ou égale à une valeur de seuil prédéterminée.

6. Procédé selon l'une quelconque des revendications précédentes, ***caractérisé en ce que*** la quantité de fluide contenue dans le système de conduites (14 ; 44, 46, 48 ; 82) au terme de la délivrance de fluide est renvoyée dans le réservoir (10 ; 40 ; 80).

7. Procédé selon l'une quelconque des revendications précédentes, ***caractérisé en ce que**,* lors de la délivrance du fluide, l'inclinaison du réservoir (10 ; 40 ; 80) et/ou l'inclinaison du système de conduites (14 ; 44, 46, 48 ; 82) est relevée et
***en ce que,*** lors de la détermination de la quantité de fluide effectivement délivrée, la quantité de fluide précédemment relevée de façon théorique est corrigée en fonction de l'inclinaison relevée.

8. Procédé selon l'une quelconque des revendications précédentes, ***caractérisé en ce qu'**en* cas de vidange complète du réservoir (10 ; 40 ; 80) par une sortie (74 ; 86), la sortie (74 ; 86) est reliée au système de conduites (14 ; 44, 46, 48 ; 82) et
***en ce que**,* pour constater la vidange complète du réservoir (10 ; 40 ; 80), la quantité de fluide contenue dans le système de conduites (14 ; 44, 46, 48 ; 82) est relevée de manière continue

9. Procédé selon l'une quelconque des revendications précédentes, ***caractérisé en ce que*** la température du fluide est relevée et ***en ce que,*** lors de la détermination de la quantité de fluide effectivement délivrée, la quantité de fluide précédemment relevée de façon théorique est corrigée en fonction de la température du fluide.

10. Dispositif pour déterminer la quantité de fluide délivrée à travers un système de conduites depuis un réservoir, en particulier un réservoir de carburant,
- avec une unité d'analyse (130) qui, pour déterminer la quantité de fluide délivrée, compare la quantité de fluide contenue dans le réservoir avant la délivrance de fluide à la quantité de fluide contenue dans le réservoir (10 ; 40 ; 80) après la délivrance de fluide, et
- avec un dispositif de mesure (20 ; 54 ; 100) prévu dans le système de conduites (14 ; 44, 46, 48 ; 82) pour relever la quantité de fluide contenue dans le système de conduites (14 ; 44, 46, 48 ; 82), qui est relié à l'unité d'analyse (130),
- l'unité d'analyse (130) étant conçue pour tenir compte de la quantité de fluide relevée dans le système de conduites (14 ; 44, 46, 48 ; 82) lors de la détermination de la quantité de fluide délivrée,
- en particulier pour appliquer le procédé selon l'une des revendications 1 à 9,
***caractérisé en ce que***
- le dispositif de mesure (20 ; 54 ; 100) est conçu en dispositif de niveau (20 ; 54 ; 100) pour relever la quantité de fluide contenue dans le système de conduites (14 ; 44, 46, 48 ; 82), et
- le dispositif de niveau (20 ; 54 ; 100) présente un tube de mesure (22 ; 56 ; 98) qui est en communication de fluide avec le système de conduites (14 ; 48 ; 82) et qui, pour former une zone de mesure en chevauchement pour le réservoir (10 ; 40 ; 80) et le tube de mesure (22 ; 56 ; 98), présente une longueur telle qu'il forme saillie au-dessus du fond du réservoir (10 ; 40 ; 80) dans la direction verticale en regardant par rapport au fond du réservoir (10 ; 40 ; 80).

11. Dispositif selon la revendication 10, ***caractérisé en ce qu*****'**entre le réservoir (10 ; 40 ; 80) et le système de conduites (14 ; 44, 46, 48 ; 82), il est prévu une vanne de réservoir (12 ; 42 ; 84) pour fermer le système de conduites (14 ; 44, 46, 48 ; 82), et ***en ce que*** le dispositif de niveau (20 ; 54 ; 100) est placé dans la direction d'écoulement du fluide à délivrer après la vanne de réservoir (12 ; 42 ; 84) sur le système de conduites (14 ; 44, 46, 48 ; 82).

12. Dispositif selon la revendication 10 ou 11, ***caractérisé en ce qu*****'**un dispositif de pompage (52 ; 94) est prévu dans le système de conduites (44, 46, 48 ; 82) et *en ce que* le dispositif de niveau (54 ; 100) est placé, dans la direction d'écoulement du fluide à délivrer, de préférence après, éventuellement également avant, le dispositif de pompage (52, 94) dans le système de conduites (44, 46, 48 ; 82).

13. Dispositif selon la revendication 10, 11 ou 12, ***caractérisé en ce que*** le système de **c**onduites (82) est divisé par une vanne, de préférence un clapet anti-retour (104), en une première section et une deuxième section venant après (102, 106), la deuxième section (106) présentant un branchement pour des tuyaux pleins (114, 116), et
***en ce que*** le dispositif de niveau (100) est placé dans la première section (102).

14. Dispositif selon la revendication 13, ***caractérisé en ce que*** la première section (102) présente un branchement (110) pour des tuyaux vides.

15. Dispositif selon la revendication 13 ou 14, ***caractérisé en ce que**,* près du branchement (110) pour tuyaux vides ou près du branchement pour tuyaux pleins, il est dans chaque cas une vanne de fermeture (108, 112) sur le système de conduites (82).

16. Dispositif selon l'une quelconque des revendications 10 à 15, ***caractérisé en ce que*** le tube de mesure (22 ; 56 ; 98) s'étend au moins approximativement verticalement dans la position à zéro degré du réservoir (19 ; 40 ; 80).

17. Dispositif selon l'une quelconque des revendications 10 à 16, ***caractérisé en ce que*** le tube de mesure est conformé en tube de niveau (22 ; 56 ; 98) du dispositif de niveau (20 ; 54 ; 100), qui présente une tige de niveau (24 ; 58 ; 126) logée dans le tube de niveau (22 ; 56 ; 98) pour mesurer le niveau du fluide.

18. Dispositif selon l'une quelconque des revendications 10 à 17, ***caractérisé en ce qu'***un autre dispositif de mesure, de préférence un dispositif de niveau (28 ; 68 ; 132) est prévu, avec lequel le niveau du fluide dans le réservoir (10 ; 40 ; 80) peut être relevé et qui est relié à l'unité d'analyse (130).

19. Dispositif selon l'une quelconque des revendications 10 à 18 ***caractérisé en ce que*** le système de conduites (82) est relié au réservoir (80) par un embout de sortie (86),
***en ce que*** l'embout de sortie (86) communique avec le réservoir (80) par la vanne de réservoir (84) et,
***en ce que*** l'embout de sortie (86) peut être fermé en direction de l'extérieur par une vanne de sortie (88).

20. Dispositif selon la revendication 19, ***caractérisé en ce qu*****'**entre l'embout de sortie (86) et le système de conduites (82) est prévue une vanne de fermeture (90) pour fermer le système de conduites (82).

21. Véhicule citerne, en particulier véhicule citerne à carburant, avec un dispositif selon l'une quelconque des revendications 10 à 20 ci-dessus.
